# EUROPEAN PATENT APPLICATION

(11) **EP 4 563 335 A1**
(43) Date of publication of application: **04.06.2025**
(21) Application number: 23213352.0
(22) Date of filing: 30.11.2023
(51) Int. Cl.: B29C 70/54

(54) **METHOD FOR PREPARING A VACUUM SEALED LAYER STACK OF FIBER MATS ON A THREE-DIMENSIONAL MOLD SURFACE OF A MOLD**

(71) Applicant: Siemens Gamesa Renewable Energy A/S, 7330 Brande (DK)
(72) Inventor: Krogh, Christian, 9000 Aalborg (DK)
(74) Representative: SGRE-Association

(57) **Abstract**

Method for preparing a vacuum sealed layer stack (9) of fiber mats (3, 3a, 3b) on a three-dimensional mold surface (2) of a mold (1), comprising the arrangement of at least one friction layer (6, 6a) between two of the fiber mats (3, 3a, 3b) in an edge region (7, 7a) of the fiber mats (3, 3a, 3b) during or after the arrangement of the fiber mats (3, 3a, 3b), wherein the friction layer (6, 6a) projects over the edges of the fiber mats (3, 3a, 3b) and is fixated with a projecting part (8, 8a) to the mold (1) or a fixation layer (10a) arranged on the mold surface (2).

## Description

The invention refers to a method for preparing a vacuum sealed stack of fiber mats on a three-dimensional mold surface of a mold.

For the building of larger items like a wind turbine rotor blade usually smaller fiber reinforced preform elements are prefabricated. Said preform elements are then arranged at a larger blade mold, in which either the complete turbine blade or a part of it is produced. A certain number of these preform elements are arranged at specific positions and are afterwards embedded in a polymeric resin, as commonly known. Such a fiber reinforced preform element comprises a polymeric binder with embedded fiber mats, also described as fiber ply, for example made of glass fibers or carbon fibers. For the manufacturing of such a preform element, which is a composite item, it is necessary to arrange the fiber mats as a layer stack in a preform mold having a three-dimensional mold surface, said surface geometry defines the final geometry of the preform element. Usually, the mold surface is concave and has a U-shaped cross-section. The fiber mats are arranged mat by mat for building the stack, wherein usually the mats and thereby this stack extends from one lateral side of the mold to the other lateral side, so that the final stack also corresponds to the three-dimensional surface geometry and particularly the U-shaped cross-section. The layer stack, to which the polymeric binder in powder form is applied, is finally covered by a vacuum foil and a vacuum is drawn underneath the vacuum foil, so that the layer stack is fixated, whereafter heat is applied for melting the polymeric binder, which is cured afterwards, thereby building the sufficiently stiff and rigid preform element.

As mentioned, the mold surface has a three-dimensional shape, it is preferably U-shaped. The separate, pre-cut fiber mats are arranged manually or automatically on the mold surface on predefined locations. Due to the three-dimensional shape and particularly the U-shape it is possible that a fiber mat may slide or slump in steeper mold sections, thereby changing the layer set up, wrinkles may occur etc. For addressing this problem, it is for example possible to fixate the lateral ends of the fiber mats on a rake or a set of spikes provided at the mold, as disclosed in EP 3400133 A1. This lateral fixation avoids any sliding. Nevertheless, this way of fixation necessitates the arrangement of a rake or spikes at the mold, which makes the mold more and the vacuum bagging complicated, whereby the operators may get hurt at the rake or the spikes when arranging the fiber mats. Another solution is to use an adhesive for fixating the fiber mats or fiber plies to the one below. Further it is known from US 10179425 B2 to stitch the fiber mats together with needle and thread. The use of an adhesive or of a stitching thread bears the disadvantage, that both the adhesive and the thread remain as left overs in the final preform, as they cannot be removed before the heat activation of the applied polymeric binder. The adhesive is a chemical means and needs to be thoroughly chosen, so that it does not interfere with the polymeric binder. The threat impacts the laminate structure.

It is therefore an object of the invention to provide an improved method for preparing a vacuum sealed layer stack of fiber mats on a three-dimensional mold surface.

For addressing this object, the invention proposes a method with the following steps:
a) arranging the fiber mats as a stack on the mold surface,
b) arranging at least one friction layer between two of the fiber mats in an edge region of the fiber mats during or after the arrangement of the fiber mats in step a), wherein the friction layer projects over the edges of the fiber mats and is fixated with a projecting part to the mold or a fixation layer arranged on the mold surface,
c) covering the stack with a vacuum foil and sealing the foil to the mold or the fixation layer except for the area where the projecting part of the friction layer is fixated to the mold or the fixation layer,
d) evacuating the space underneath the vacuum foil until the stack of the fiber mats is fixated,
e) removing the at least one friction layer and sealing the vacuum foil completely to the mold or the fixation layer,
f) drawing a final vacuum underneath the vacuum foil.

The inventive method is characterized by the arrangement of one or more removable friction layers between adjacent fiber mats, said friction layers prohibit any sliding during the layup process. The or each friction layer is arranged in an edge region of the fiber mats, preferably, for example when longitudinal preform elements are built, at the longitudinal edges such, that they project with a projecting part over the edges of the fiber mats, so that they can be fixated to either the mold surface itself or a fixation layer arranged on the mold surface, said fixation layer may for example be a first vacuum foil used for the final vacuum bagging. When all layers are arranged, including the one or several friction layers, the whole stack is precisely in position due to the friction in the edge region prohibiting any movement of one layer relative to another.

This stack is then covered with a vacuum foil, which is sealed either to the mold surface or to the fixation layer arranged on the mold surface, for example as mentioned a first vacuum foil. This sealing is made along the edges of the vacuum foil, except for the area, where the projecting part or parts of the one or several friction layers project over the fiber mat edges or the fixation area of the projecting part or parts to the mold surface or the fixation layer. This partial sealing is sufficient that a slight vacuum can be drawn underneath the vacuum foil, so that a slight evacuation of the space underneath the vacuum foil to the mold surface is possible. A first evacuation state is reached. This slight vacuum is sufficient to fixate the fiber mats in their stacked arrangement, so that it is now possible to remove the one or several friction layers from their arrangement between neighboring fiber mats.

After removal of the one or several friction layers the vacuum foil is finally sealed to the mold surface or the bottom fixation layer like the mentioned vacuum foil, so that the layer stack is completely packed. Now the final vacuum can be drawn underneath the vacuum foil, so that a complete vacuum bagging is finally realized. A final second evacuation state is reached. The fiber mat layup is now completely vacuum fixated and perfectly held in place, further processing is possible. This further processing may for example be the activation of polymeric binder or resin infusion of the layer stack, so that after curing of the binder or resin the final preform element is built in the mold. If the layer stack is completely wrapped in a lower and upper vacuum foil, so that a complete vacuum bag is built by these two foils is given, it is also possible to remove this vacuum bag from the preform mold and transport it to a storage area for a later infusion.

The inventive method is superior over the prior art methods, as no specific mold setup like the arrangement of spikes etc. is necessary, nor are any fixation means needed, which remain in the finally built preform element, like an adhesive or a thread. Instead, according to the invention, the friction layer or layers are completely removed before the final evacuation or before reaching the second final evacuation state, no left over remains. As the friction layers are flexible layers, they perfectly adapt to the shape of the mold surface or of the fiber layers already arranged in the mold, so that during the layup the friction layers also have no impact on the stack structure. Also the removal is simple, as the or all friction layers extend with their projecting parts out of the layer stack covered by the vacuum foil, so that they can easily be gripped and removed.

Usually, the layer stack comprises more than two fiber mats or fiber plies, so that preferably also several friction layers are arranged between different pairs of adjacent fiber mats, wherein the friction layers project with their projecting parts to the same side. For an easy removal all friction layers project at a common side, so that they can all be removed together. The projecting part are fixated to the mold surface or the fixation layer likely vacuum foil arranged on the mold surface, and are preferably also fixated to each other.

It is sufficient to arrange the one or the several friction layers only at one lateral side or lateral edge of the fiber mats or the fiber mat stack. The fixation by the friction provided by the friction layers only at one side is sufficient, as the fiber mats or fiber plies reach from one lateral mold edge to the other lateral mold edge, as they are pre-cut to the desired size. Due to their sufficient stiffness, the fixation at only one lateral side or edge is sufficient.

They or each friction layer is preferably strip-like. As mentioned, the friction layer or layers are arranged only in the edge region. Therefore, the friction layers may be sufficiently small, as the contact area does not need to be too large due to the friction connection.

Preferably the or each friction layer extends over at least 50% of the length of the edge region, preferably over at least 75% of the length of the edge region. Depending on the length of the layer stack and the length of the fiber mat layers it may be sufficient to use preferably strip-like friction layers which extend only over approx. 50% of the length of the edge region, when for example the length of the fiber mats correspondence to the length of the finally built stack. But as in most cases the length of the edge region is remarkably great and several fiber mats are arranged overlapping in a row, the friction layers need to be longer, and extend preferably over at least 75% of the length of the edge, or they even extend over 100% of the length of the edge.

As mentioned, when the first slight vacuum is drawn or the first evacuation state is reached, the one or the several friction layers are removed. This removal is preferably realized by manually pulling the at least one or the several friction layers out from the fixated layer stack. As mentioned, the one or the several friction layers project over the edge of the fiber mat stack, so that they can easily be gripped manually and be simply pulled out of the stack. This pulling action does not have any impact on the arrangement of the fiber mats, as they are sufficiently fixated by the slight vacuum. Further, this vacuum is low enough, so that the fixation of the friction layers between at the adjacent fiber mats is not too strong and the friction layers can easily be pulled out.

Preferably there or each friction layer is made of a polymer. The material of the friction layers needs to be sufficiently tacky or needs to have a sufficient tacky surface, so that a sufficient friction connection to the neighboring fiber mat, which avoids any sliding, is realized. Preferably the friction layers are made of a polymeric material.

Such a polymer may for example be a silicone, which material is available with various degrees of tack. In the alternative, also in elastomer may be used, said material is also available in different types and with various degrees of tack. Finally, also synthetic rubber may be used. This material also shows a sufficient tack.

As already mentioned, it is possible to first arrange a fixation layer directly on the mold surface. This fixation layer is preferably also a vacuum foil, wherein both vacuum foils are finally sealed together bagging the stack as a closed bag. The layer stack is in this embodiment completely wrapped in the vacuum foil bag, which completely seals the stack. Due to the drawn vacuum the layer stack and thereby the whole bag maintains its three-dimensional shape defined by the mold surface, so that this vacuum bag may be removed from the free from mold without changing its geometry. This allows for transporting the vacuum bag to a storage area, where it is stored until it is needed for the final infusion of the binder.

Other objects and features of the present invention will become apparent from the following detailed description considered in conjunction with the accompanying drawings. The drawings, however, are only principle sketches designed solely for the purpose of illustration and do not limit the invention. The drawings show:
- fig. 1 - 8: various principal illustrations of a preform mold for illustrating the arrangement of the fiber mats as a layer stack including the friction layers and bagging the stack in a vacuum foil, according to a first embodiment, and
- fig. 9, 10: two principal illustrations of a preform mold for illustrating the arrangement of the fiber mats as a layer stack including the friction layers and bagging the stack in a vacuum foil, according to a second embodiment.

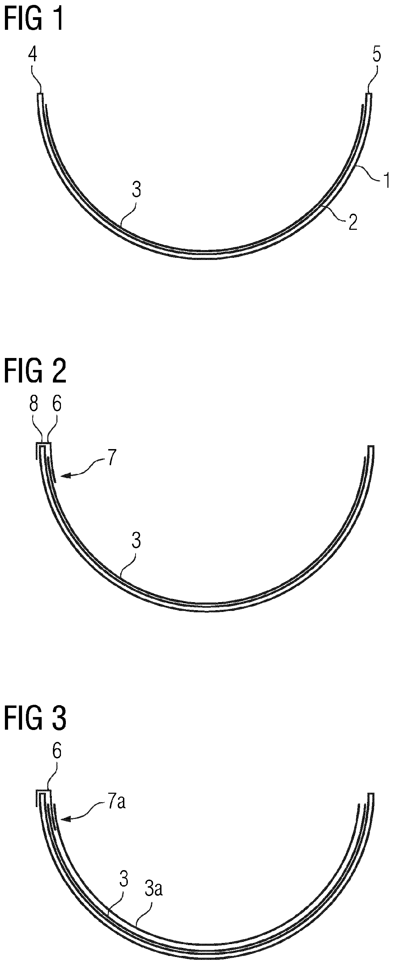

The figures 1 - 8 show in principal illustrations the arrangement of the fiber mats as a stack in a preform mold, together with the friction layers for fixating them against any sliding, and the final bagging of the stack bagged in a vacuum foil.

Fig. 1 shows a mold 1 having a three-dimensional and in this embodiment concave mold surface 2, which defines the shape of a preform element which shall be finally built. On the mold surface 2 a first fiber mat 3 is arranged. The fiber mat 3 extends from one lateral side 4 to the other lateral side 5 of the mold 1. The mold 1 certainly also extends in the lengthwise direction, usually for several meters, when the preform element to be built is for example part of a wind turbine blade. Certainly, this example is not restricting, as the preform element or the composite element may also be used for building other items. Depending on the length of the mold 1 and the length of the fiber mats 3, it is certainly possible to arrange two or more such fiber mats 3 in a row with a certain overlap or the like.

After arranging the first fiber mats 3 according to fig. 1, a first friction layer 6 is arranged in an edge region 7 of the fiber mat 3, so that the strip-like friction layer 6 slightly overlaps with the edge region 7 of the fiber mat 3. The friction layer 6 projects with a projecting part 8 over the edge of the fiber mat 3 and extends also onto this surface 2 and even further, wherein the projecting part 8 is fixated to the mold surface 2 or the mold 1. The friction layer 6 is made of a sufficiently tacky material, preferably a polymeric material and within these material group preferably a silicone. As the friction layer 6 and in particular the silicone is sufficiently tacky, the fiber mat 3 sticks to it. Due to the fixation of the projecting part 8 to the mold surface 2 or the mold 1, preferably also realized due to the tacky properties of the material of the friction layer 6, the edge region 7 is held in place and cannot slide down in the steeper region of the mold 1. Due to the stiffness of the fiber mat 3 the fixation at only one edge region 7 is sufficient to avoid any sliding of the whole fiber mat 3 in both edge regions 7.

In the next step, see figure 3, a second fiber mat 3a is arranged on top of the first fiber mat 3, wherein this fiber mat 3 has approximately the same size as the first fiber mat 3. The edge region 7 a of this second fiber mat 3a overlaps the first friction layer 6, so that due to the tacky properties of the friction layer 6 also the edge region 7a and with it also the second fiber mat 3a is fixated in place and secured against sliding.

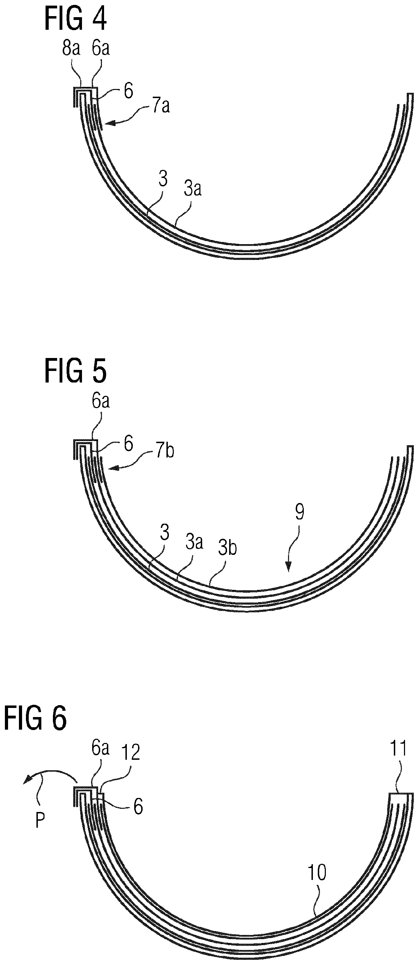

In the next step, see fig. 4, a second friction layer 6a is arranged overlapping the edge region 7a. Said second friction layer 6a, again, projects over the edge of the second fiber mat 3a and overlaps the first friction layer 6 or its projecting part 8 with its projecting part 8a, as shown in fig. 4. This projection part 8 is also sufficiently fixated to the mold surface 2 or the mold 1 or to the first projecting part 8 of the already fixated first friction layer 6.

In the next step, shown in fig. 5, a third fiber mat 3b is arranged on top of the second fiber mat 3a. The edge region 7b overlaps the second friction layer 6a and sticks to it due to the tack of the friction layer 6a. It is assumed in this example, that now the whole stack 9 is built, wherein certainly also more fiber mats and friction layers may be stacked if necessary. All fiber mats 3, 3a, 3b are sufficiently secured in place by means of the friction layer 6, 6a, no sliding occurs.

In the next step according to fig. 6 a vacuum foil 10 is arranged over the stack 9 covering the whole stack 9. The vacuum foil 10 is fixated and sealed along its edges 11 both to the lateral side 5 of the mold 1 and the front and back sides of the mold 1. It is assumed that the vacuum foil 10 and the mold 1 have a rectangular shape, seen from the above, so that they vacuum for 10 is fixated and sealed to the mold 1 or the mold surface 2 along three edges 11, one front edge, one lateral edge and one back edge. The remaining lateral edge is not fixated or sealed to the mold 1, but overlaps over the friction layers 6, 6a, as shown in principal in fig. 6.

After arranging the vacuum foil 10 and sealing it to the mold 1 or the mold surface 2, as shown in fig. 6, a slight vacuum is drawn underneath the vacuum foil 10, in particular between the vacuum foil 10 and the mold surface 2, what is possible due to the sealing of the vacuum foil 10 to the mold 1 or the mold surface 2. The fact, that there is no sealing all along the edge 12, but only an overlapping, it does not prohibit the drawing of a slight vacuum. This first vacuum or the first evacuation state realized by the vacuum slightly compresses the stack 9 and thereby fixates the fiber mats 3, 3a, 3b together and to the mold surface 2, so that they layer stack 9 is compressed to a certain extent.

As indicated by the arrow P in fig. 6, now, as the layer stack 9 is fixated, the friction layers 6, 6a, which project over the edge or out of the layer stack 9 and onto the mold surface 2 or the mold 1, are pulled out of the layer stack 9, preferably manually by a simple pulling action to the side. This is easily possible, as, due to the slight vacuum applied, the friction layer 6, 6a are not strongly affected by the vacuum and can therefore be pulled out. But the vacuum is sufficient to fixate the fiber mats 3, 3a, 3b and thereby the whole layer stack 9 in place during the pulling action, so that this pulling action has no impact on the layer structure.

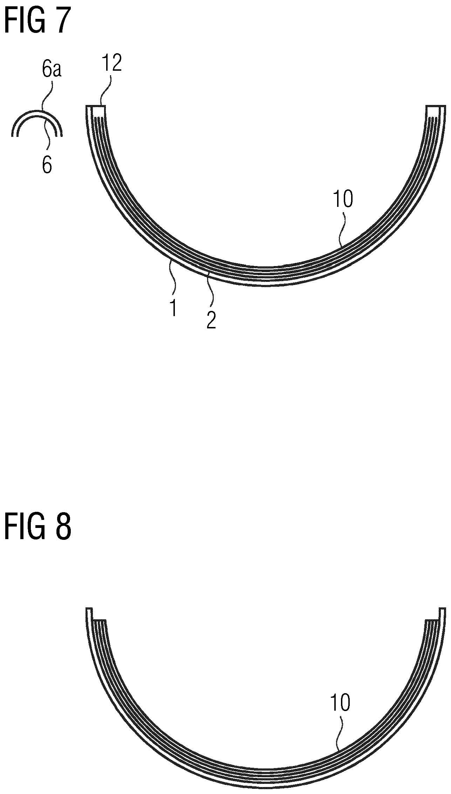

Fig. 7 shows the situation after pulling the friction layers 6, 6a out of the layer stack 9. The edge 12 of the vacuum foil 10 now also overlaps onto the mold surface 2, so that it can also be finally sealed to the mold surface 2 or the mold 1. Now the vacuum foil 10 is completely sealed all along its entire edges to the mold 1 or the mold surface 2.

In the next step, shown in fig. 8, a final vacuum is now drawn underneath the vacuum foil 10, in particular between the vacuum foil 10 and the mold surface 2. With this final vacuum or the second evacuation state, in which a sufficiently high vacuum is drawn, the layer stack 9 is finally compressed and fixated in its final shape. In this state now the binder previously applied to the fiber mats 3, 3a, 3b and thereby the stack 9 can be activated by heat for melting the binder for embedding the fiber mats 3, 3a, 3b in the binder, which afterwards cures. After the final curing, the vacuum layer 10 is removed and the finally built preform element can be removed from the mold 1.

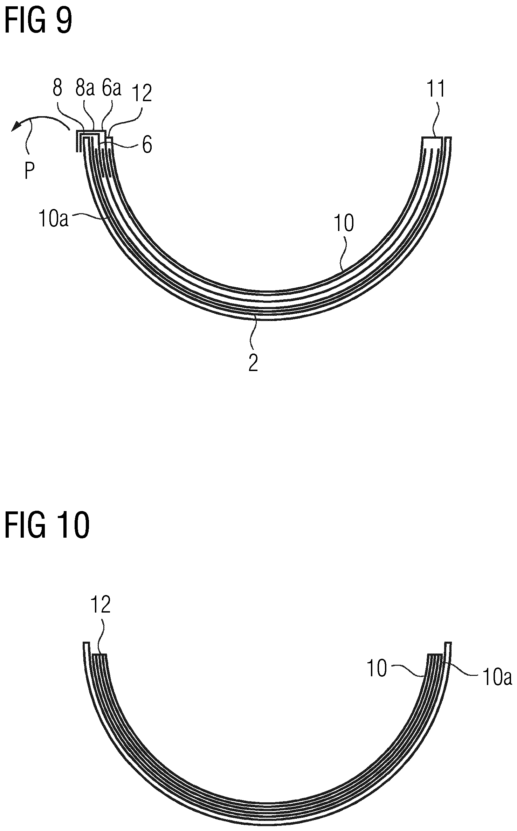

Fig. 9 and 10 show another embodiment of the invention. In this embodiment, a first vacuum foil 10a is arranged in the first step directly on the mold surface 2. This vacuum foil 10a is a fixation layer, on which the layer stack 9 is arranged in the way as described regarding fig. 1 - 8. The difference between the method of fig. 1 - 8 and the fig. 9 and 10 is, that the additional vacuum foil 10 a is arranged on the mold surface 2.

As mentioned, the fiber mats 3, 3a and 3b are arranged together with the friction layers 6, 6a as described regarding fig. 1 - 8, wherein also here the friction layers 6, 6a project over the respective edges of the fiber mats 3, 3a, 3b and extend over the vacuum foil 10a, to which they may be attached and fixated due to their tackiness, or they extend further onto the mold surface 2 of the mold 1, to which they are fixated due to their tackiness. After arranging the whole stack 9, the vacuum layer 10 arranged and covers the whole stack 9. It is now sealed with its edge 11 to the vacuum foil 10a, except for the area where the projecting parts 8, 8a project from the layer stack 9. Now the first vacuum is drawn for reaching the first evacuation state as shown in fig. 9. In this state the friction layers 6, 6a, which again project to the same side, are manually pulled out of the layer stack 9. Now, finally, the edge 12 of the upper vacuum foil 10 is sealed to the edge of the lower vacuum foil 10a, so that the whole stack is completely packed in a vacuum foil bag. Finally, the second vacuum is drawn or the vacuum is enhanced for reaching the second evacuation state, further compressing the layer stack 9. As in this embodiment the layer stack 9 is completely packed and envelope in the vacuum foil bag made by the vacuum foils 10, 10a, and as due to the vacuum the three-dimensional geometry is frozen and the layer stack is completely fixated, the vacuum bag can now be removed from the mold 1 and can be transported to a storage area, where it is stored until further processing. During this transportation and storage the layer stack 9 does not change its geometry, as the vacuum is maintained and still fixates the arrangement.

As is obvious from the above description, the final layer stack only comprises the fiber mats, but no other means for fixating them in place during the fiber mats layup in the mold, as in the prior art, where for example an adhesive or a thread is used. Therefore, no items, which are not relevant for the final preform element, and which could, in the worst case, have a negative impact on the final preform element, are comprised in the layer stack arrangement according to the invention.

Although the present invention has been described in detail with reference to the preferred embodiment, the present invention is not limited by the disclosed examples from which the skilled person is able to derive other variations without departing from the scope of the invention.

Independent of the grammatical term usage, individuals with male, female or other gender identities are included within the term.

## Claims

1. Method for preparing a vacuum sealed layer stack (9) of fiber mats (3, 3a, 3b) on a three-dimensional mold surface (2) of a mold (1), with the steps:
a) arranging the fiber mats (3, 3a, 3b) as a stack (9) on the mold surface (2),
b) arranging at least one friction layer (6, 6a) between two of the fiber mats (3, 3a, 3b) in an edge region (7, 7a) of the fiber mats (3, 3a, 3b) during or after the arrangement of the fiber mats (3, 3a, 3b) in step a), wherein the friction layer (6, 6a) projects over the edges of the fiber mats (3, 3a, 3b) and is fixated with a projecting part (8, 8a) to the mold (1) or a fixation layer (10a) arranged on the mold surface (2),
c) covering the stack (9) with a vacuum foil (10) and sealing the vacuum foil (10) to the mold (1) or the fixation layer (10a) except for the area where the projecting part (8,8a) of the friction layer (6, 6a) is fixated to the mold (1) or the fixation layer (10a),
d) evacuating the space underneath the vacuum foil (10) until the stack (9) of the fiber mats (3, 3a, 3b) is fixated,
e) removing the at least one friction layer (6, 6a) and sealing the vacuum foil (10) completely to the mold (2) or the fixation layer (10a),
f) drawing a final vacuum underneath the vacuum foil (10) .

2. Method according to claim 1, **characterized in that** several friction layers (6, 6a) are arranged between different pairs of adjacent fiber mats (3, 3a, 3b), wherein the friction layers (6, 6a) project with their projecting part (8, 8a) to the same side.

3. Method according to claim 1 or 2, **characterized in that** the or each friction layer (6, 6a) is strip-like.

4. Method according to one of the preceding claims, **characterized in that** the or each friction layer (6, 6a) extends over at least 50% of the length of the edge region (7, 7a), preferably over at least 75% of the length of the edge region (7, 7a).

5. Method according to one of the preceding claims, **characterized in that** the at least one or the several friction layers (3, 3a, 3b) are pulled out from the fixated layer stack (9).

6. Method according to one of the preceding claims, **characterized in that** the or each friction layer (6, 6a) is made of a polymer.

7. Method according to claim 6, **characterized in that** the polymer is a silicone, an elastomer or synthetic rubber.

8. Method according to one of the preceding claims, **characterized in that** the fixation layer is a vacuum foil (10a), wherein both vacuum foils (10, 10a) are finally sealed together bagging the stack (9).
